# EUROPEAN PATENT SPECIFICATION

(11) **EP 0 371 263 B1**
(45) Date of publication and mention of the grant of the patent: **23.06.1993**
(21) Application number: 89119939.0
(22) Date of filing: 26.10.1989
(51) Int. Cl.: D06F 58/28

(54) **A protective device for laundry drying machines**
Sicherheitsvorrichtung für Wäschetrockner
Dispositif de sécurité pour séchoirs à linge

(30) Priority: 29.11.1988 IT 4576988
(43) Date of publication of application: 06.06.1990
(73) Proprietor: INDUSTRIE ZANUSSI S.p.A., I-33170 Pordenone (IT)
(72) Inventor: Cinello, Arturo, I-33032 Bertiolo Udine (IT); Grandin, Graziello, I-33170 Pordenone (IT)
(74) Representative: Herrmann-Trentepohl, Werner, Dipl.-Ing.

(56) References cited:
- EP-A- 0 312 072
- AU-B- 496 417
- GB-A- 2 079 911
- US-A- 3 942 265

## Description

The present invention relates to a protective device for laundry drying machines, in particular combined machines for washing and drying laundry, adapted to avoid overheating of the laundry and of the metal parts of the machine in the case of functional defects thereof.

As is known, the current combined machines for washing and drying laundry are designed to perform the washing of the laundry introduced into the drum contained within the vessel of the machine, and the subsequent drying of the laundry by means of a flow of hot air generated by a fan and circulated via at least one electric heating element connected to the electric circuit of the machine along with a regulating thermostat adapted to switch on and off the heating element repeatedly, thereby keeping the temperature of the hot air within predetermined limits.

These combined machines can furthermore be provided with a condenser disposed within the circulation path of the hot air and crossed by cold water circulated in closed circuit by a separate pump in order to condense the vapor produced during the drying of the laundry, thereby effecting drying cycles with high efficiency.

Finally, these combined machines are also provided with a safety thermostat situated within the hottest zone of the washing vessel and connected operatively with the heating element in order to switch off this element in the case of defective functioning of the fan caused by an accidental failure of the fan motor and/or of the transmission belt connecting the motor with the fan rotor. In this state a flow of air with a lower rate of flow could be effected through the vessel or the flow of air could be interrupted, resulting in a danger of the laundry and the metal parts of the machine overheating.

The safety thermostat can likewise perform the same function for the aforesaid purposes if the flow of cold water for condensing the vapor is reduced or interrupted due to a functional failure of the pump or the condenser.

To meet standardizing requirements, the safety thermostat in question must be of the manual repair type, so that when its intervention temperature is reached it causes the heating element to be switched off, keeping it constantly switched off to allow the employed staff to repair or replace the element.

However, if there is a temporary interruption in the power supply of the machine during a drying cycle so that the heating element and the fan are temporarily switched off, the safety thermostat is opened by the elevated temperature of the heating element which, because of the temperature lag, overheats temporarily due to the lack of a flow of air.

Consequently, the heating element is kept switched off and can be switched on again only if the safety thermostat is put back into operation manually.

On the other hand, the safety thermostat could be calibrated to an intervention temperature higher than that of the above-described thermostat so that it intervenes only if the flow of air is interrupted.

In this case, however, excessive heating temperatures could be reached in the machine, resulting in less reliable performance of the drying cycles.

In EP 0 312 072 it is disclosed a safety device for a laundry drier which cuts the electric power supply in response to functional defects during operation of the drying air circulation. The safety device comprises control means which are connected to a heater element and to a protection thermostat and which operate in dependence on the reset time of the thermostat. EP 0 312 072 is a prior application according to art. 54.III EPC.

It would therefore be favorable, and is the object of the present invention, to eliminate the disadvantages and limits of the above-described solutions by means of a protective device associated with a safety thermostat for drying machines and adapted to cause the thermostat to intervene in the presence of defective functioning of the fan and, in the case of drying machines with vapor condensation, in the presence of any failure of the pump and/or the condenser of the machine, said protective device being furthermore adapted to switch on and off the heating element of the machine with thermostatic regulation and without requiring any manual intervention to put the safety thermostat back into operation if there is a temporary interruption in the power supply of the machine.

This and other objects are obtained according to the invention by means of a protective device whose features are protected by the claims formulated below.

The invention will become more apparent from the following description, intended solely by way of a nonrestrictive example, with reference to the adjoined figures, in which
Fig. 1 shows schematically a combined machine for washing and drying laundry provided with the protective device according to the invention;
Fig. 2 shows the electric circuit diagram of the present protective device.

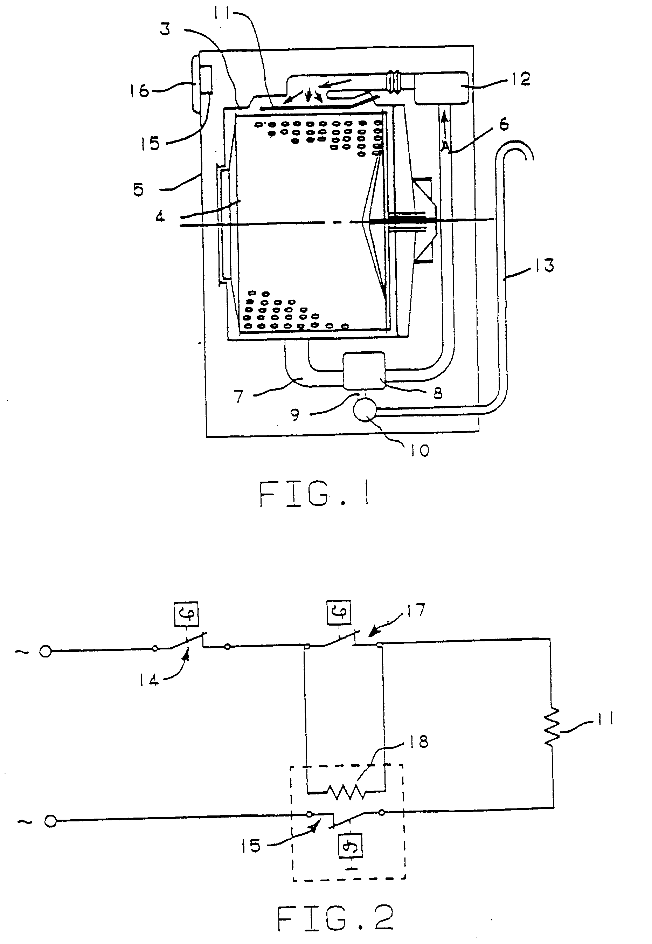

Referring to Fig. 1, which shows schematically a laundry drying machine and in particular a combined machine for washing and drying laundry, one can see that it substantially comprises a washing vessel 3 containing a rotating drum 4 and supported in the conventional way within a cabinet 5, and a conduit 6 for circulating the hot air that is connected with the lower part of vessel 3 via a flexible conduit 7 and a discharge manifold 8 provided with an outlet 9 connected with discharge pump 10 of the machine, said circulating conduit being furthermore connected with the upper part of the vessel.

The present combined machine further comprises at least one electric heating element 11 provided in correspondence with the upper zone of vessel 3, and a fan 12 connected to circulating conduit 6 and adapted to effect closed-circuit circulation of the air heated by heating element 11 through the conduit and within drum 4 in the direction of arrow *A*. In this way, the machine in question can perform the conventional washing cycles on the laundry by introducing the washing liquid into vessel 3 and, at the end of washing, discharging the liquid to the outside due to the action of discharge pump 10 and through flexible conduit 7, discharge manifold 8 and discharge conduit 13 connected with the pump. The machine can furthermore perform the conventional drying cycles on the laundry at the end of washing by circulating the hot air through the drum due to the action of fan 12 and of heating element 11.

To effect the thermostatic regulation of the temperature of the hot air, the machine in question also comprises a conventional regulating thermostat 14 operatively connected with heating element 11 and situated within vessel 3 in a zone removed from the heating element where the temperature is not excessively elevated, the regulating thermostat being adapted to switch heating element 11 on and off repeatedly, thereby keeping within predetermined limits the temperature of the hot air inside drum 4.

To prevent the laundry and the metal parts of the machine from overheating in case heating element 11 is switched on while fan 12 is defective (e.g. due to failure of the driving motor and/or breakage of the transmission belt connecting the motor with the rotor of the fan), when the flow of air effected through the drum would be insufficient or nonexistent, the present combined machine comprises a conventional-type safety thermostat 15 with manual repair which is connected operatively with heating element 11 and provided in the machine in a position not exposed to the flow of hot drying air, e.g. within cabinet 5 in the vicinity of control panel 16 of the machine. The machine finally comprises a further safety thermostat 17 with automatic repair that is calibrated to an intervention temperature higher than that of regulating thermostat 14, connected operatively with heating element 11 and situated in the hottest zone of vessel 3 in the vicinity of the heating element.

The purpose of this further safety thermostat is to switch off heating element 11 temporarily if the power supply of the machine is interrupted, and to switch the heating element back on when the power supply has been restored.

Referring now to Fig. 2, which shows the electric circuit diagram of the present combined machine, one can see that regulating thermostat 14 and safety thermostats 15 and 17 are connected in series with heating element 11, while in its turn safety thermostat 17 is connected in parallel to at least one electric resistor 18 or similar element of elevated ohmic value and low electric power (e.g. 7 W and 5,6 kΩ), the electric resistor being disposed in heat-conducting contact with the thermostat bulb (not shown) of safety thermostat 15.

The protective device thus realized functions in the following way. During each drying cycle of the machine and in the normal operative states thereof, heating element 11 is controlled thermostatically by regulating thermostat 14, thereby keeping the temperature of the hot drying air within predetermined limits.

In this state, safety thermostats 15 and 17 are both closed since their respective intervention temperatures are not reached, while resistor 18 is short-circuited by thermostat 17.

In the case of any temporary interruption of the power supply of the machine, safety thermostat 17 opens, while in their turn resistor 18 and heating element 11 are deenergized.

Consequently, while heating element 11 progressively cools, thermostat 15 is not heated by resistor 18 since the latter is not influenced by heating element 11, which is spaced from the resistor.

Consequently, thermostat 15 remains closed and thus, as soon as the power supply is restored, heating element 11 is switched back on via thermostat 17. In this way, heating element 11 is controlled automatically by thermostat 17 and no longer requires the previously necessary manual intervention to be put back into operation.

Conversely, for the above reasons and with the above consequences, thermostat 17 opens as soon as its intervention temperature is reached, in the case of a functional defect of fan 12, thereby causing heating element 11 to be energized via resistor 18.

Consequently, thermostat 15 is progressively heated by resistor 18 and opens in accordance with its intervention temperature, thereby switching off heating element 11.

The latter can then be switched back on, after the defect in the machine has been repaired, solely by putting safety thermostat 15 back into operation manually, in the way currently realized in similar circumstances.

The present device is of a simple and reliable type, assures efficient protection of the machine during the performance of each drying cycle and likewise requires manual intervention in the machine to put safety thermostat 15 back into operation solely after a failure of a functional component of the machine has repaired.

## Claims

1. A protective device for laundry drying machines, in particular combined machines for washing and drying laundry, comprising a vessel (3) and a rotating washing drum (4), as well as a fan (12) and at least one electric heating element (11) adapted to effect a flow of hot air through the drum, said heating element (11) being connected with first thermostatic means (14) adapted to control the temperature of the hot air, and with second thermostatic means (15) with manual repair having an intervention temperature higher than that of said first thermostatic means (14), said device comprises third thermostatic means (17) with automatic repair having an intervention temperature higher than that of said first thermostatic means (14) and connected in series with the heating element (11) and with said first (14) and second thermostatic means (15) as well as parallel with at least one electric resistor (18) or similar element disposed in heat-conducting contact with said second thermostatic means (15), said third thermostatic means (17) being situated in the hottest zone of the vessel and being adapted to cause, in accordance with their intervention temperature, said heating element (11) to be switched on via said electric resistor (18) which has an elevated ohmic value.

2. The protective device of claim 1, characterized in that said electric resistor (18) is dimensioned so as to have low electric power.

## Patentansprüche

1. Sicherheitsvorrichtung für Wäschetrockner, insbesondere für kombinierte Geräte zum Waschen und Trocknen von Wäsche, umfassend einen Behälter (3) und eine rotierende Waschtrommel (4) sowie ein Gebläse (12) und zumindest ein elektrisches Heizelement (11), welches so ausgebildet ist, daß es einen Strom von Heißluft durch die Trommel bewirkt, wobei das Heizelement (11) mit einer ersten Thermostateinrichtung (14), mit der die Temperatur der Heißluft regelbar ist, und mit einer zweiten Thermostateinrichtung (15) mit manueller Instandsetzung und einer höheren Interventionstemperatur als die erste Thermostateinrichtung (14) verbunden ist, wobei die Vorrichtung eine dritte Thermostateinrichtung (17) mit automatischer Instandsetzung umfaßt, deren Interventionstemperatur höher ist als die der ersten Thermostateinrichtung (14) und die mit dem Heizelement (11) und mit der ersten (14) und zweiten Thermostateinrichtung (15) in Reihe und mit zumindest einem elektrischen Widerstand (18) oder einem ähnlichen mit der zweiten Thermostateinrichtung (15) in wärmeleitendem Kontakt stehenden Element parallel geschaltet ist, wobei die dritte Thermostateinrichtung (17) in dem wärmsten Bereich des Behälters angeordnet und so ausgebildet ist, daß sie entsprechend ihrer Interventionstemperatur ein Einschalten des Heizelements (11) über den elektrischen Widerstand (18), der einen erhöhten Ohm-Wert aufweist, bewirkt.

2. Sicherheitsvorrichtung nach Anspruch 1,
dadurch gekennzeichnet, daß
der elektrische Widerstand (18) so dimensioniert ist, daß er eine niedrige elektrische Leistung aufweist.

## Revendications

1. Dispositif de sécurité pour séchoirs à linge, en particulier de machines combinées pour laver et sécher le linge, comprenant une cuve (3) et un tambour de lavage rotatif (4), ainsi qu'un ventilateur (12) et au moins un élément de chauffage électrique (11) adapté pour produire un écoulement d'air chaud à travers le tambour, ledit élément de chauffage (11) étant relié à un premier moyen thermostatique (14) adapté pour commander la température de l'air chaud et à un deuxième moyen thermostatique (15) pourvu d'un réglage manuel, présentant une température d'intervention supérieure à celle dudit premier moyen thermostatique (14), ledit dispositif comprenant un troisième moyen thermostatique (17) pourvu d'un réglage automatique, présentant une température d'intervention supérieure à celle dudit premier moyen thermostatique (14) et relié en série avec l'élément de chauffage (11) et avec lesdits premier (14) et deuxième (15) moyens thermostatiques, ainsi qu'en parallèle avec au moins une résistance électrique (18) ou un élément analogue disposé en contact conducteur de la chaleur avec ledit deuxième moyen thermostatique (15), ledit troisième moyen thermostatique (17) étant situé dans la zone la plus chaude de la cuve et adapté pour provoquer, en fonction de leur température d'intervention, la mise en fonctionnement dudit élément de chauffage (11), via ladite résistance électrique (18) qui présente une valeur ohmique élevée.

2. Dispositif de sécurité selon la revendication 1, caractérisé en ce que ladite résistance électrique (18) est dimensionnée de manière à présenter une faible puissance électrique.
